**Europäisches Patentamt**

**European Patent Office**

**Office européen des brevets**

(19)

(11) Veröffentlichungsnummer: **0 065 019**
**A1**

(12) # EUROPÄISCHE PATENTANMELDUNG

(21) Anmeldenummer: **81103737.3**

(22) Anmeldetag: **15.05.81**

(51) Int. Cl.³: **G 01 N 27/22,** B 01 D 53/26

(43) Veröffentlichungstag der Anmeldung: **24.11.82**
**Patentblatt 82/47**

(84) Benannte Vertragsstaaten: **AT BE DE FR GB IT**

(71) Anmelder: **BAUER KOMPRESSOREN GMBH,**
**Drygalski-Allee 37, D-8000 München 71 (DE)**

(72) Erfinder: **Bauer, Heinz, Drygalski-Allee 37,**
**D-8000 München 71 (DE)**
Erfinder: **Piening, Jens, Dr.-Ing., Ahornweg 21,**
**D-8135 Söcking (DE)**

(54) **Verfahren zur Bestimmung des Sättigungsgrades einer zur Trocknung eines feuchten Gases geeigneten Trocknungspatrone und Vorrichtungen zur Durchführung des Verfahrens.**

(57) Verfahren zur Bestimmung des Sättigungsgrades einer zur Trocknung eines feuchten Gases geeigneten Trocknungspatrone (1) mit Granulat (3) aus hygroskopischem Material, wobei die Veränderung der relativen Dielektrizitätskonstante als Maß für den Sättigungsgrad des hygroskopischen Materials (3) dient. Zusätzlich wird die Aubildung einer Trocknungspatrone (1) zur Durchführung dieses Verfahrens angegeben sowie geeignete elektrische Schaltungen (5).

EP 0 065 019 A1

Verfahren zur Bestimmung des Sättigungsgrades
einer zur Trocknung eines feuchten Gases geeigneten Trocknungspatrone und Vorrichtungen
zur Durchführung des Verfahrens

Die Erfindung bezieht sich auf ein Verfahren zur Bestimmung des Sättigungsgrades einer zur Trocknung eines
feuchten Gases, insbesondere Luft, geeigneten Trocknungspatrone, die ein Granulat aus hygroskopischem Material
enthält.

Ein wesentliches Problem bei der Herstellung von Druckgas, insbesondere Druckluft, ist die Trocknung der komprimierten Luft, was üblicherweise mit Hilfe von hygroskopischen Granulaten erfolgt. Solche hygroskopische Granulate
sind üblicherweise in Trocknungspatronen enthalten, durch
die die komprimierte Luft zur Trocknung hindurchgeführt
wird. Da bei den üblicherweise verwendeten Granulaten,
wie z. B. Aluminiumoxid, der Umschlag von trocken nach
feucht sehr schnell erfolgt und danach ein Wasserentzug aus der komprimierten Luft nicht mehr möglich ist,
muß in der Praxis darauf geachtet werden, daß rechtzeitig bevor das gesamte, in der Trocknungspatrone

- 2 -    0065019

enthaltene Granulat mit Feuchtigkeit gesättigt ist, die verbrauchte Patrone gegen eine neue ausgetauscht wird. Um kein Risiko einzugehen, sind Sicherheitsgrenzen einzuhalten, zumal die Feuchte des zu trocknenden Gases stark von der Temperatur abhängt und deshalb die Standzeit einer Patrone nicht einfach aus der getrockneten Gasmenge bestimmt werden kann. Man muß also eine neue Patrone schon dann einsetzen, wenn die vorhergehende sicher noch nicht den Sättigungsgrad erreicht hat. Dieses Verfahren ist nicht optimal, da häufig nur zu einem Bruchteil gesättigte Patronen ausgewechselt werden und dadurch der Verbrauch an Trocknungspatronen hoch ist. Schließlich stellt der Auswechselvorgang für die Trocknungspatrone jeweils eine Unterbrechung des Betriebsablaufs dar, was ebenfalls unerwünscht ist.

Aufgabe der vorliegenden Erfindung ist es deshalb, den Sättigungsgrad einer zur Trocknung feuchten Gases, insbesondere Luft, geeigneten Trocknungspatrone möglichst genau zu bestimmen, um so die Patrone erst dann gegen eine frische auswechseln zu müssen, wenn sie wirklich zu ihrer Gänze verbraucht ist, andererseits ein zu spätes Auswechseln der Patrone und somit die Abgabe von unzureichend getrocknetem Gas zu vermeiden.

Erfindungsgemäß wird diese Aufgabe dadurch gelöst, daß man die Veränderung der relativen Dielektrizitätskonstante $\varepsilon$ rel. als Maß für den Sättigungsgrad des hygroskopischen Materials verwendet. Es hat sich nämlich gezeigt, daß die relative Dielektrizitätskonstante von hygroskopischen Granulaten, wie z. B. Aluminiumoxid dann erheblich ansteigt, wenn das Granulat $H_2O$ gebunden hat.

Das erfindungsgemäße Verfahren wird vorteilhafterweise mit Hilfe von Trocknungspatronen durchgeführt, wie sie in den Patentansprüchen 2 bis 5 gekennzeichnet sind.

Eine grundsätzliche Ausführungsform einer erfindungsgemäßen Trocknungspatrone ist dadurch gekennzeichnet, daß sie eine zentral in das hygroskopische Material eingebettete Elektrode aufweist und eine zumindest teilweise elektrisch leitende innere Oberfläche, wobei sowohl von der Elektrode als auch von der leitenden inneren Oberfläche elektrische Anschlüsse nach außen geführt sind. Zur Durchführung des Verfahrens wird dann über diese elektrischen Anschlüsse der Trocknungspatrone die Elektrode einerseits und die leitende innere Oberfläche der Patrone andererseits als Kondensator geschaltet und mittels einer Meßschaltung eine Kapazitätsänderung dieses Kondensators bestimmt. Aus der Kapazitätsänderung kann dann mit Hilfe empirisch festgelegter Eichkurven der Sättigungsgrad der Trocknungspatrone genau ermittelt werden.

Vorteilhaft ist es, wenn die Elektrode in einem benachbart zum Ausgang für das getrocknete Gas liegenden Bereich der Patrone angeordnet ist. Das in der Patrone befindliche hygroskopische Granulat wird nämlich praktisch schichtweise, beginnend vom Eingang der noch feuchten Druckluft bis hin zum Ausgang der getrockneten Druckluft aus der Patrone gesättigt, so daß über einen weiten Bereich der Patrone, der bis etwa 95 % der Füllung umfassen kann, eine Messung der relativen Dielektrizitätskonstante bzw. der Veränderung dieser relativen Dielektrizitätskonstante nicht erforderlich ist. Erst dann, wenn der letzte Rest von hygroskopischem Material in der Patrone seinen Sättigungsgrad erreicht, muß dies bemerkt werden. Aus diesem Grund ist es aus baulichen Gesichtspunkten heraus vorteilhaft, die Trocknungspatrone entsprechend Patentanspruch 3 auszubilden.

Um hohe Meßgenauigkeit zu erzielen, ist es vorteilhaft, einen Kondensator möglichst großer Kapazität und damit großer Kapazitätsänderung bei Sättigung des Granulats in der Trocknungspatrone zu haben. Aus diesem Grund ist es vorteilhaft, die Elektrode in ihrer Form der Patronenwandung anzupassen. Bei einem bevorzugten Ausführungsbeispiel erfolgt diese Anpassung in der Weise, daß sowohl die Elektrode als auch die Patronenwandung zylindrische Form aufweisen, wodurch praktisch ein Zylinderkondensator entsteht.

Erfindungsgemäß kann die Schaltung der Trocknungspatrone bzw. des in ihr gebildeten Kondensators als reine Meßschaltung ausgeführt sein, in der durch ein Anzeigeinstrument die tatsächliche Kapazität des Kondensators wiedergegeben wird. Es kann jedoch auch bei einer weiteren Ausführungsform der Erfindung eine Vorrichtung dahingehend gekennzeichnet sein, daß mit Hilfe einer Vergleichsschaltung die tatsächliche Kapazität des Kondensators mit einem einstellbaren Sollwert verglichen wird und bei Überschreiten dieses Sollwerts ein Warn- und/oder ein Abschaltsignal für einen die Druckluft liefernden Kompressor erzeugt wird. Bei der zuletzt genannten Ausführungsform ist die Vorrichtung dann vom Bedienungspersonal unabhängig.

Schließlich besteht eine weitere Ausführungsform der Erfindung darin, daß bei Unterschreiten eines eingestellten Sollwerts für die Kapazität des Kondensators der Druckluftstrom blockiert wird. Eine solche Ausführungsform dient dazu, daß die Vorrichtung nicht aus Versehen dann in Betrieb genommen wird, wenn überhaupt keine Trocknungspatrone in die Vorrichtung eingesetzt ist.

- 5 -          0065019

Anhand der beigefügten Zeichnungen wird die Erfindung näher erläutert. In den Zeichnungen zeigt

Fig. 1      den Querschnitt durch eine erfindungsgemäße Trocknungspatrone,

Fig. 2      eine Meß- und Vergleichsschaltung für die
            Bestimmung der Kapazität des in die Trocknungspatrone eingesetzten, bzw. von ihr gebildeten
            Kondensators.

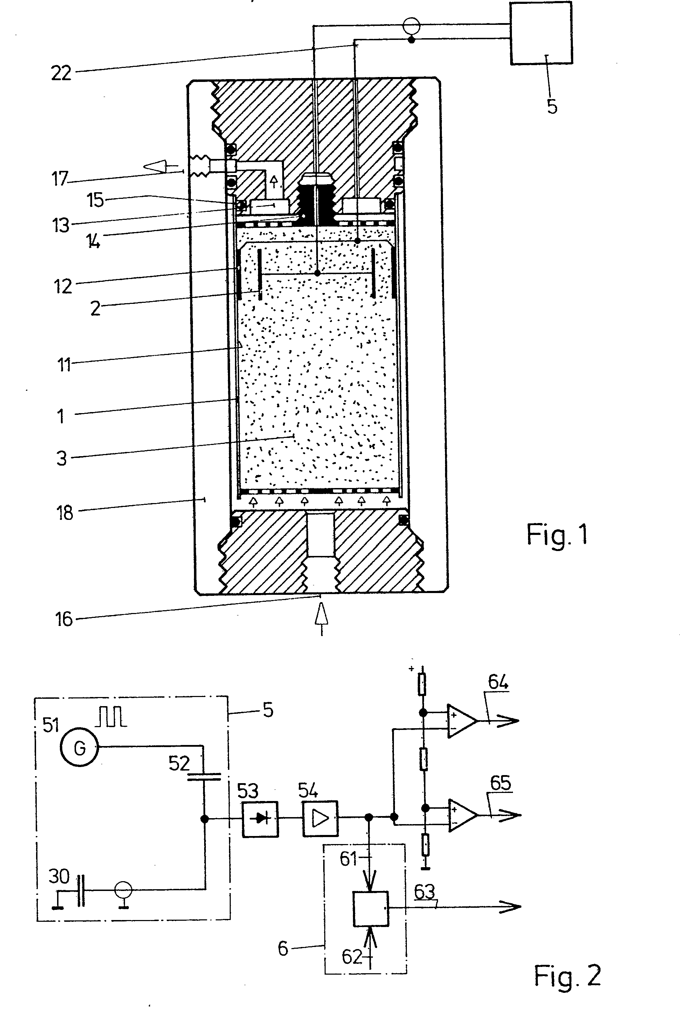

In Fig. 1 ist ein zylindrisches Gehäuse 18 dargestellt, das in seinem Innenraum eine Trocknungspatrone 1 für die Trocknung feuchter Luft aufnimmt. Das Gehäuse 18 ist an seiner unteren Stirnfläche mit einem Eingang 16 versehen, durch welchen feuchte Druckluft einströmen kann und im Bereich seines oberen Randes mit einem seitlichen Ausgang 17, durch welchen getrocknete Druckluft ausströmen kann. Die Trocknungspatrone 1 ist mit hygroskopischem Granulat 3 gefüllt. Am oberen Ende ist die Trocknungspatrone 1 mit einem Gewindestutzen 14 in die obere Stirnwand des Gehäuses 18 eingeschraubt und mit einer Ringdichtung 15 gegen das Gehäuse abgedichtet. In ihrem oberen Bereich 12 ist die innere Oberfläche 11 der Trocknungspatrone 1 metallisiert. Gegenüber dem metallisierten Bereich 12 ist eine zylindrische Elektrode 2 in das hygroskopische Material 3 der Trocknungspatrone zentral eingebettet. Sowohl vom metallisierten Bereich 12 als auch von der Elektrode 2 führen elektrisch leitende Anschlüsse 22 nach außen. In einer Meßschaltung, die in ihrer Gesamtheit mit 5 bezeichnet ist, kann die von der metallisierten Oberfläche 12 und der Elektrode 2 gebildete Kapazität ihrer Größe nach bestimmt werden.

Die in Fig. 2 dargestellte elektrische Schaltung ist eine Meß- und Vergleichsschaltung zur Bestimmung einer unbekannten Kapazität, die als Kondensator 3oeingezeichnet ist. Dieser Kondensator 30 steht für den von der Elektrode 2 einerseits und von der metallisierten Oberfläche 12 andererseits der Trocknungspatrone gebildeten Kondensator. Die Schaltung zeigt lediglich das Prinzip, da davon ausgegangen wird, daß es einem Durchschnittsfachmann auf dem Gebiet der Elektrotechnik bekannt ist, wie eine solche Meß- und Vergleichsschaltung aufgebaut sein muß. In der Schaltung ist mit 51 ein Generator zur Erzeugung einer Rechteckspannung bezeichnet, mit 52 ein Kondensator genau vorherbestimmter bekannter Kapazität, mit 53 ein Gleichrichter und mit 54 ein Verstärker. Die Ausgangsgröße 61 der in ihrer Gesamtheit mit 5 bezeichneten Meßschaltung ist die gemessene Kapazität des Kondensators 30. Diese Kapazität kann nun auf ein Meßinstrument geführt werden oder mit einem vorher eingestellten Sollwert 62 verglichen werden. Das Ergebnis dieses Vergleichs ist ein Ausgangssignal 63, welches z. B. zu einer Warneinrichtung führen kann oder einen Schalter für die Abschaltung des die Druckluft liefernden Kompressors betätigen kann oder aber ein Ventil für die Blockierung des Druckluftstromes schalten kann. Die Vergleichsschaltung, die in ihrer Gesamtheit mit 6 bezeichnet ist, soll vorzugsweise für drei verschiedene Ausgangssignale geeignet sein. Ein erstes Ausgangssignal 64 soll dann gegeben sein, wenn eine vorher bestimmte Untergrenze der Kapazität unterschritten wird. Ein zweites Signal 65 soll dann gegeben sein, wenn eine vorher bestimmte erste Obergrenze der Kapazität überschritten wird, wobei dieses Signal als Vorwarnsignal dienen kann und ein drittes Signal 63 soll dann gegeben werden können, wenn eine zweite Obergrenze die oberhalb der ersten Obergrenze der Kapzazität liegt, überschritten wird. Dieses Signal soll dann ein Abschaltsignal sein.

Patentansprüche

1. Verfahren zur Bestimmung des Sättigungsgrades einer zur Trocknung feuchten Gases, insbesondere Luft, geeigneten Trocknungspatrone, die ein Granulat aus hygroskopischem Material enthält, dadurch gekennzeichnet, daß man die Veränderung der relativen Dielektrizitätskonstante ($\varepsilon$ rel.) als Maß für den Sättigungsgrad des hygroskopischen Materials verwendet.

2. Trocknungspatrone zur Trocknung von Druckgas insbesondere Druckluft, die mit Granulat aus hygroskopischem Material, wie z. B. Aluminiumoxid, gefüllt ist, dadurch gekennzeichnet, daß sie eine zentral in das hygroskoische Material eingebettete Elektrode (2) aufweist und eine zumindest teilweise elektrisch leitende innere Oberfläche (11), wobei sowohl von der Elektrode (2) als auch von der leitenden inneren Oberfläche (11) elektrische Anschlüsse (22) nach außen geführt sind.

0065019

3. Trocknungspatrone nach Anspruch 2, dadurch gekennzeichnet, daß die Elektrode (2) in einem benachbart zum Ausgang (13) für das getrocknete Gas liegenden Bereich der Patrone (1) angeordnet ist.

4. Trocknungspatrone nach den Ansprüchen 2 und 3, dadurch gekennzeichnet, daß die Elektrode (2) in ihrer Form der Patronenwandung angepaßt ist.

5. Trocknungspatrone nach den Ansprüchen 2 bis 4, dadurch gekennzeichnet, daß die Patronenwandung und die Elektrode (2) zylindrische Form aufweisen.

6. Vorrichtung zur Trocknung von Druckgas, insbesondere Druckluft mit einer Trocknungspatrone nach einem oder mehreren der Ansprüche 2 bis 5, dadurch gekennzeichnet, daß die Elektrode (2) und die leitende innere Oberfläche (11) der Patrone (1) über die elektrischen Anschlüsse (22) als Kondensator (30) geschaltet sind, wobei mittels einer Meßschaltung (5) eine Kapazitätsänderung dieses Kondensators (30) bestimmbar ist.

7. Vorrichtung nach Anspruch 6, dadurch gekennzeichnet, daß mit Hilfe einer Vergleichsschaltung (6) die tatsächliche Kapazität (61) des Kondensators (30) mit einem einstellbaren Sollwert (62) verglichen wird und bei Überschreiten dieses Sollwerts (62) ein Warn- und/oder ein Abschaltsignal (63) für einen die Druckluft liefernden Kompressor erzeugt wird.

8. Vorrichtung nach den Ansprüchen 6 oder 7, dadurch gekennzeichnet, daß mit Hilfe einer Vergleichsschaltung (6) die tatsächliche Kapazität (61) des Kondensators (30) mit einem einstellbaren Sollwert (62) verglichen wird und bei Unterschreiten
dieses Sollwerts der Druckluftstrom blockiert
wird.

1/1

0065019

Fig. 1

Fig. 2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 909 505 (H. MAHLO et al.) <br> * Anspruch 1; Seiten 1, 2; Fig. 1, 2 * <br> -- | 1 |
| | DD - A - 35 247 (G. FEISTEL et al.) <br> * ganzes Dokument * <br> -- | 1,2,5 |
| | US - A - 3 142 830 (R.L. PATRICK et al.) <br> * ganzes Dokument * <br> -- | 1,5 |
| | US - A - 4 259 632 (A.J. AHTIAINEN) <br> * Anspruch 1 * <br> -- | 6 |
| | US - A - 3 879 660 (J.S. PISO) <br> * Ansprüche 5, 6; Zusammenfassung; Fig. 6 * <br> -- | 7,8 |
| | Patents Abstracts of Japan <br> Band 4, Nr. 177, 9. Dezember 1980, <br> Seite 104P39 <br> & JP - A - 55 - 121145 <br> -- | 6 |
| L | JP - A - 56 - 33536 (NOMURA SANGYO K.K.) <br> & Patents Abstracts of Japan <br> Band 5, Nr. 84, 2. Juni 1981, <br> Seite 159P64 <br> -- | 1,2,5 |
| A | DE - U - 1 888 226 (MASCHINENBAU <br> HAFENHÜTTE P. LANCIER) <br> * Anspruch 1; Seiten 1, 2; Fig. 1, 2 <br> ----- | |

**KLASSIFIKATION DER ANMELDUNG (Int. Cl.³)**

G 01 N 27/22
B 01 D 53/26

**RECHERCHIERTE SACHGEBIETE (Int. Cl.³)**

B 01 D 53/26
G 01 N 27/00
G 01 R 27/26

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 18-12-1981 | HOFMANN |

EPA form 1503.1 06.78